# EUROPEAN PATENT APPLICATION

(11) **EP 4 706 872 A1**
(43) Date of publication of application: **11.03.2026**
(21) Application number: 24198704.9
(22) Date of filing: 05.09.2024
(51) Int. Cl.: B23K 35/02, B23K 35/30, B23K 35/36, B23K 35/362, C22C 38/02, C22C 38/04, C22C 38/08, C22C 38/14

(54) **WELD METAL AND RUTILE FLUX CORED WELDING WIRE FOR PRODUCING SUCH A WELD METAL**

(71) Applicant: Voestalpine Böhler Welding Fileur S.r.l., 35013 Cittadella (IT)
(72) Inventor: TODESCATO, Francesco, 1-35013 Cittadella PD (IT)
(74) Representative: SONN Patentanwälte GmbH & Co KG

(57) **Abstract**

A weld metal having the following composition:
C: 0.035 - 0.085 wt.-%
Mn: 0.150 - 0.440 wt.-%, preferably 0.150 - 0.400 wt.-%,
Si: 0.250 - 0.650 wt.-%
B: 0.002 - 0.010 wt.-%
Ti: 0.025 - 0.070 wt.-%

and optionally:
Cu: 0.000 - 0.200 wt.-%
Ni: 0.000 - 0.500 wt.-%
S: 0.000 - 0.020 wt.-%
P: 0.000 - 0.020 wt.-%
Nb, N, Mo, Al, and V: < 0.020 wt.-% each,
Cr and W: < 0.040 wt.-% each,

the balance being iron and unavoidable impurities,
wherein any percentages by weight denote the weight of the respective element with respect to the total weight of the weld metal.

## Description

The invention relates to a weld metal and a rutile flux cored welding wire for producing the weld metal according to the invention comprising a rutile flux and a sheath enclosing the rutile flux.

Rutile flux wires are commonly used in electric arc welding processes for general construction. The rutile flux helps in producing a smooth and stable arc, and produces a smooth, uniform bead with minimal spatter. Rutile flux wires can be operated in a wide range of welding current. Welds made with rutile welding wires have good mechanical properties, such as high tensile strength, ductility, and impact resistance. These characteristics make rutile welding wires user-friendly and suitable for welding a variety of metals, including mild steel, stainless steel, and aluminum.

Manganese is used in welding wires as a deoxidizer and to improve the mechanical properties of the welds. It also works by combining with impurities such as oxygen, sulfur, and nitrogen, which can cause porosity and other defects in the weld. The manganese helps to remove these impurities and produce a high-quality weld with good strength and ductility. Additionally, manganese can also help to improve the wetting properties of the weld pool, which allows the weld to flow more easily and fill gaps in the joint. This can improve the appearance and quality of the weld and reduce the risk of defects.

Manganese in welding fumes is considered more and more problematic because it is a toxic heavy metal that can cause serious health effects when inhaled. Manganese fumes are produced when welding wires containing manganese are burned during the welding process. Long-term exposure to manganese fumes can lead to a condition known as manganism, which is similar to Parkinson's disease and is characterized by symptoms such as tremors, muscle rigidity, and difficulty with coordination and balance. Prolonged exposure to high levels of manganese can also lead to other health problems, including respiratory problems and neurological effects.

To minimize the risk of exposure to manganese fumes, it is important for welders to use proper personal protective equipment, such as a respirator or face mask, and to ensure adequate ventilation during the welding process.

Therefore, there is an increasing interest to minimize workers' exposure to manganese fumes by limiting the generation of manganese fumes.

It is therefore a primary object of the instant invention to provide a rutile flux cored wire and a weld metal with reduced manganese content without limitations to the mechanical properties of the weld metal.

To solve this object, according to a first aspect, the invention provides a weld metal having the following composition:
C: 0.035 - 0.085 wt.-%
Mn: 0.150 - 0.440 wt.-%, preferably 0.150 - 0.400 wt.-%,
Si: 0.250 - 0.650 wt.-%
B: 0.002 - 0.010 wt.-%
Ti: 0.025 - 0.070 wt.-%

and optionally:
   Cu: 0.000 - 0.200 wt.-%
   Ni: 0.000 - 0.500 wt.-%
   S: 0.000 - 0.020 wt.-%
   P: 0.000 - 0.020 wt.-%
   Nb, N, Mo, Al, and V: < 0.020 wt.-% each,
   Cr and W: < 0.040 wt.-% each,
the balance being iron and unavoidable impurities,
wherein any percentages by weight denote the weight of the respective element with respect to the total weight of the weld metal.

The small amount of manganese of only 0.150 - 0.440 wt.-% would result in a decrease of the mechanical properties, if no measures were taken to compensate for the losses in tensile strength and toughness.

Boron and titanium lead to grain refinement in steels and are therefore suitable for the compensation in mechanical properties due to the reduced manganese concentration. Both elements are carefully dosed, with Boron ranging from 0.002-0.010 wt.-% and titanium ranging from 0.025-0.070 wt.-%. Concentrations below these ranges result in insufficient mechanical properties. On the other hand, concentrations above those ranges lead to a huge increase in tensile strength, but also an unwanted drop in toughness, due to undesired precipitates at grain boundaries.

According to a preferred embodiment of the invention, the weld metal comprises a weight ratio B/Ti of 0.03-0.4, preferably 0.03-0.33, preferably 0.03-0.27. Working outside of this ratio can be deleterious for toughness.

Nickel can also partially substitute the role of manganese in ensuring mechanical properties. It is possible to have nickel in a range of up to 0.500 wt.-%. Preferably, nickel is present in the weld metal in an amount of 0.15-0.5 wt.-%. Nonetheless, nickel is very expensive and also a key element to be controlled in fume emissions due to its potential harmful behavior. If the toughness is sufficient without nickel, it is best to not employ it. Therefore, nickel is listed as an optional element in the weld metal of the invention.

P and S are not intentionally added in this invention and are present as impurities mostly due to their presence in the sheath of the rutile flux cored electrode.

A weld metal of this composition guarantees to fulfill EN ISO 17632-A:2015: T42 3 P M21 1 H5 and AWS 5.20:2021: E71T1M/T-9M/T-12M H4.

According to a preferred embodiment of the invention, the weld metal has the following composition:
C: 0.040 - 0.080 wt.-%
Mn: 0.200 - 0.440 wt.-%, preferably 0.200 - 0.400 wt.-%,
Si: 0.300 - 0.650 wt.-%
B: 0.002 - 0.010 wt.-%
Ti: 0.030 - 0.070 wt.-%
and optionally:
Cu: 0.000 - 0.200 wt.-%
Ni: 0.000 - 0.500 wt.-%
S: 0.000 - 0.015 wt.-%
P: 0.000 - 0.015 wt.-%

The amount of Nb, N, Mo, Al, and V has to be < 0.020 wt.-% each and Cr and W < 0.040 wt.-% each, the balance being iron and unavoidable impurities. Any percentages by weight denote the weight of the respective element with respect to the total weight of the weld metal.

According to another preferred embodiment of the invention, the weld metal has the following composition:
C: 0.045 - 0.075 wt.-%
Mn: 0.200 - 0.400 wt.-%
Si: 0.350 - 0.600 wt.-%
B: 0.002 - 0.008 wt.-%
Ti: 0.030 - 0.065 wt.-%
and optionally:
Cu: 0.000 - 0.200 wt.-%
Ni: 0.000 - 0.500 wt.-%
S: 0.000 - 0.015 wt.-%
P: 0.000 - 0.015 wt.-%

The amount of Nb, N, Mo, Al, and V has to be < 0.020 wt.-% each and Cr and W < 0.040 wt.-% each, the balance being iron and unavoidable impurities. Any percentages by weight denote the weight of the respective element with respect to the total weight of the weld metal.

Preferably, the weld metal comprises a weight ratio Ti/Al of 10-50.

Preferably, the weld metal comprises a weight ratio Mn/C of 3.5-6.

Preferably, the summed amount of Ti and Al in the weld metal comprises 0.035-0.070 wt.-%, based on the total weight of weld metal.

Preferably, the summed amount of Mn and C in the weld metal comprises 0.25-0.45 wt.-%, based on the total weight of the weld metal.

It is preferably provided that the weld metal of the invention has a tensile strength Rm of greater than 500 MPa particularly preferably greater than 520 MPa, measured in a tensile test according to EN ISO 6892-1:2019.

The weld metal of the invention preferably has an offset yield strength Rp_{0.2} greater than 420 MPa, particularly preferably greater than 450 MPa, measured in a tensile test according to EN ISO 6892-1:2019. The offset yield strength Rp_{0.2} is the 0.2% yield point, which corresponds to the uniaxial mechanical stress at which the permanent elongation based on the initial length of the specimen is exactly 0.2% after unloading.

The weld metal of the invention preferably has an elongation at break A > 22 %, preferably A > 25%, measured in a tensile test according to EN ISO 6892-1:2019. The elongation at break A is defined as the permanent change in length ΔL of a specimen in the tensile test after fracture has occurred, in relation to the initial length Lₒ.

Further, the weld metal of the invention preferably has a necking Z = 65-75%, measured in a tensile test according to EN ISO 6892-1:2019. The necking Z is defined as the relative reduction of the cross-section of a test specimen after fracture has occurred compared to the original cross-section.

Furthermore, it is preferably provided that the weld metal of the invention has an adsorbed impact energy of greater than 47 J, particularly preferably greater than 80 J, at -30°C. The absorbed impact energy is determined in a notched-bar impact bending test according to EN ISO 148-1:2016.

According to a second aspect, the invention provides a rutile flux cored welding wire, comprising a rutile flux and a sheath enclosing the rutile flux, the welding wire being designed to produce a weld metal according to this invention in an arc welding process.

According to the invention, the rutile flux cored welding wire has the following composition:

| | |
|---|---|
| C: | 0.035 - 0.075 wt.-% |
| Mn: | 0.300 - 0.600 wt.-% |
| Si: | 0.300 - 0.700 wt.-% |
| B: | 0.005 - 0.020 wt.-% |
| Ti: | 0.150 - 0.400 wt.-% |
| Mg: | 0.300 - 0.700 wt.-% |
| TiO₂: | 5.000 - 10.000 wt.-% |
| SiO₂: | 0.500 - 1.000 wt.-% |

and optionally:

| | |
|---|---|
| P: | 0.000 - 0.020 wt.-% |
| S: | 0.000 - 0.002 wt.-% |
| Ni: | 0.000 - 0.450 wt.-% |
| Cu: | 0.000 - 0.300 wt.-% |

Cr, Nb, N, Mo, Al, W and V: 0.000 - 0.035 wt.-% each,
at least one arc stabilizer containing, e.g., sodium oxide and potassium oxide, the balance being iron and unavoidable impurities, wherein any percentages by weight denote the weight of the respective element with respect to the total weight of the welding wire.

The use of a rutile cored welding wire according to this invention in an electric arc welding process results in significantly less manganese fumes. In particular, it has been observed that the fume collected during the analysis, measured according to EN ISO 15011-4:2017, contains less than 4 wt.-%, preferably less than 3 wt.-% of Mn. The Mn emission rate is around 70% lower with respect to a classic rutile cored wire and below 0.250 mg/sec.

According to the invention, the welding wire comprises C in an amount of 0.035 - 0.075 wt.-%. Carbon is used in the composition in order to increase tensile properties of the weld metal. The lower limit of the claimed range has been chosen to ensure Rm of greater than 500 MPa and Rp_{0.2} greater than 420 MPa. On the other hand, the content of carbon shall not exceed 0.075 wt.-%, because such higher values cause a drop in the toughness that does not reach adsorbed impact energy values > 47J@-30°C.

According to the invention, the welding wire comprises a Mn range of 0.300 - 0.600 wt.-%. Mn is used in welding wires as a deoxidizer and to improve the mechanical properties of the welds, together with other side benefits already described previously.

According to the invention, the welding wire comprises Si in the range of 0.300 - 0.700 wt.-% that works as deoxidizer and allows to have a suitable fluidity of the weld pool, allowing a good wetting and weldability. Moreover, Si assists the reaching of proper tensile properties. Lower or higher values of Si do not allow optimal weld pool behavior.

As discussed before, B and Ti in the range of 0.005 - 0.020 wt.-%, and 0.150 - 0.400 wt.-%, respectively, work as grain refiners in steels allowing suitable mechanical properties to be achieved despite the reduction in Mn. Furthermore, Ti works also as deoxidizer. Concentrations below these ranges result in insufficient mechanical properties, while concentrations above those ranges lead to an increase in tensile strength driving to an unwanted drop in toughness due to the formation of undesired B and Ti based precipitates at the grain boundaries of the weld metal crystalline microstructure.

The role of Mg in the range of 0.300 - 0.700 wt.-% is to deoxidize the weld pool and the weld metal. After the welding process, traces of Mg are present in the weld metal and almost all the magnesium forms oxide in the slag. Lower amount of Mg does not allow a proper deoxidation leaving this role to other elements, such as Mn, Ti and Si, lowering their presence in the weld metal and as a consequence driving to a variation of the mechanical properties. Higher amount of Mg can lead to the presence of Mg or Mg compounds in the weld metal, giving a high drop in toughness and ductility.

According to the invention, the welding wire comprises TiO₂ in the range of 5.000 - 10.000 wt.-%, and SiO₂ in the range of 0.500 - 1.000 wt.-%, respectively. Both of these compounds act as slag forming agents. TiO₂ ensures a fast-freezing slag formation allowing to weld in all positions (i.e.: flat, vertical up, overhead, etc). SiO₂ presence, as a slag forming agent, is very important for rutilic FCAW product because the TiO₂/SiO₂ ratio strongly affects the balance between slag removal and good weldability. The presence of SiO₂ is crucial to obtain not only a welding consumable with defined chemical composition and mechanical properties, but also a product that can be used by welders in real application because of easy slag removal and proper weldability.

According to the invention, the welding wire comprises P in the range of 0.000 - 0.020 wt.-% and S in the range of 0.000 - 0.002 wt.-%. Both of these elements are undesired pollutants coming from the sheet and flux.

According to the invention, the welding wire comprises Ni in an amount of 0.000 - 0.450 wt.-%. Nickel can partially substitute the role of manganese in ensuring mechanical properties.

According to the invention, the welding wire comprises Cu in the range 0.000 - 0.300 wt.-% because the welding wire may optionally be coated with a coating that can being made of or comprising Cu.

According to a preferred embodiment, the rutile flux cored welding wire may have the following composition:

| | |
|---|---|
| C: | 0.040 - 0.070 wt.-% |
| Mn: | 0.350 - 0.600 wt.-% |
| Si: | 0.300 - 0.600 wt.-% |
| B: | 0.005 - 0.020 wt.-% |
| Ti: | 0.200 - 0.400 wt.-% |
| Mg: | 0.350 - 0.650 wt.-% |
| TiO₂: | 5.500 - 10.000 wt.-% |
| SiO₂: | 0.500 - 0.900 wt.-% |

and optionally:

| | |
|---|---|
| P: | 0.000 - 0.015 wt.-% |
| S: | 0.000 - 0.0015 wt.-% |
| Ni: | 0.000 - 0.450 wt.-% |
| Cu: | 0.000 - 0.250 wt.-% |

Cr, Nb, N, Mo, Al, W and V: 0.000 - 0.035 wt.-% each,
at least one arc stabilizer containing, e.g., sodium oxide and potassium oxide, the balance being iron and unavoidable impurities, wherein any percentages by weight denote the weight of the respective element with respect to the total weight of the welding wire.

According to another preferred embodiment, the rutile flux cored welding wire may have the following composition:

| | |
|---|---|
| C: | 0.040 - 0.065 wt.-% |
| Mn: | 0.350 - 0.550 wt.-% |
| Si: | 0.350 - 0.600 wt.-% |
| B: | 0.005 - 0.018 wt.-% |
| Ti: | 0.200 - 0.350 wt.-% |
| Mg: | 0.400 - 0.650 wt.-% |
| TiO₂: | 6.000 - 9.500 wt.-% |
| SiO₂: | 0.550 - 0.900 wt.-% |

and optionally:

| | |
|---|---|
| P: | 0.000 - 0.015 wt.-% |
| S: | 0.000 - 0.0015 wt.-% |
| Ni: | 0.000 - 0.450 wt.-% |
| Cu: | 0.000 - 0.250 wt.-% |

Cr, Nb, N, Mo, Al, W and V: 0.000 - 0.035 wt.-% each,
at least one arc stabilizer containing, e.g., sodium oxide and potassium oxide, the balance being iron and unavoidable impurities, wherein any percentages by weight denote the weight of the respective element with respect to the total weight of the welding wire.

The at least one arc stabilizer, in each of the above embodiments, may preferably be present in an amount of 0.4-1.3 wt.-%, preferably 0.5-1.2 wt.-%, preferably 0.6-1.2 wt.-% of the welding wire. The at least one arc stabilizer is preferably selected to introduce Na and K into the composition. The arc stabilizers preferably comprise at least one stabilizer selected from the group consisting of: sodium oxide, potassium oxide, potassium feldspar, synthetic cryolite and sodium titanate.

Nickel may in each of the above embodiments be contained in an amount of 0.15-0.45 wt.-% based on the total weight of the welding wire. During the arc welding process using the rutile flux cored wire, nickel is efficiently transferred from the wire to the weld metal with minimal losses. To achieve a desired nickel content in the deposited weld metal, which is desirable for optimum toughness, the nickel content in the welding wire should also be in a similar range. While nickel provides benefits to the mechanical properties of the weld metal, especially toughness, its use also has some drawbacks. Nickel is an expensive alloying element, so higher nickel contents can significantly increase the cost of the welding consumables. Additionally, nickel fumes generated during the welding process may be subject to more stringent exposure limits and controls in the future if the hazardousness of nickel fumes is re-evaluated by regulatory bodies. Therefore, the preferred range of nickel strikes a balance by limiting the nickel content to a maximum of 0.45 wt.-%. This upper limit provides the toughness benefits of nickel while managing the cost impact and potential future risks associated with nickel fumes. If the required weld metal properties can be achieved without any nickel additions, it may be preferable to utilize a nickel-free wire for those applications.

Preferably, the welding wire comprises a weight ratio Mn/Ti of 0.75-4, preferably 1.5-2.5. This ratio is significantly lower than that used in prior art low manganese welding wires, which typically require much higher amounts of titanium to achieve sufficient Charpy V-notch (CVN) impact toughness.

In some prior art embodiments, the high titanium content is necessary to compensate for the lack of silicon, which plays a crucial role in deoxidation and improving CVN toughness. Moreover, the low manganese and silicon contents in prior art welding wires force titanium, along with magnesium and aluminum, to act as the primary deoxidizing agents. In contrast, the welding wire of the present invention utilizes manganese as a substitutional element in the iron crystalline lattice. The difference in atomic size between manganese and iron leads to lattice distortion, which hinders the movement of dislocations and consequently enhances the tensile properties of the steel. Additionally, manganese acts as a strong deoxidizing element in the steel, working in conjunction with other strong deoxidizers such as magnesium and silicon.

Titanium, being an important element in the steel, contributes to a slight lattice distortion and partially influences the tensile properties. In the presence of strong deoxidizing elements like manganese, magnesium, and silicon, titanium plays a less significant role as a deoxidizer in the welding wire. The primary function of titanium in this invention is to form titanium compounds, such as titanium carbides, which precipitate at the lattice grain boundaries at high temperatures. These precipitates serve as nucleation points during the phase transition of the steel from austenitic to ferritic/pearlitic phases. The resulting smaller grains in the final crystalline structure lead to higher toughness and improved tensile properties. However, excessive titanium can lead to the formation of undesired titanium-based compounds, which may deteriorate the mechanical properties of the steel. By carefully controlling the amounts of manganese and titanium in the welding wire, a synergistic effect is achieved, resulting in a final crystalline structure and lattice distortion that ensures the desired tensile properties while maintaining good toughness. Furthermore, the presence of silicon and magnesium, along with manganese, ensures effective deoxidation, leading to high Charpy v-notch impact values.

According to a preferred embodiment of the invention, the rutile flux cored welding wire comprises a weight ratio of boron to titanium (B/Ti) in the range of 0.015-0.10, preferably 0.030-0.090, preferably 0.030-0.060. This ratio ensures that both elements work together to refine the grain structure and improve the mechanical properties of the resulting weld metal. Boron, when added in the defined amounts to low-alloy steel, plays a crucial role during the gamma-alpha (γ-α) transition, which is the transformation from the austenitic to the ferritic state. During this transition, boron effectively reduces the coarsening of ferritic grains, leading to grain refinement. However, the effectiveness of boron in grain refinement is strongly dependent on its relationship with the carbon content in the steel.

If the amount of boron added is too low, no significant effect on grain refinement can be observed. Conversely, if the boron content is too high, it can lead to the precipitation of fragile phases such as borides and carbon borides. These brittle phases can cause a substantial decrease in the toughness of the weld metal.

Titanium works in a similar manner to boron in promoting grain refinement. The controlled addition of titanium, along with boron, creates a synergistic effect that enhances the mechanical properties of the weld metal. Grain refinement is highly beneficial for improving both tensile strength and toughness. Smaller grains result in a higher number of grain boundaries, which act as barriers to dislocation displacement. Dislocations are responsible for the propagation of cracks in the material, so by limiting their movement, the grain boundaries help to prevent crack growth and improve the overall toughness of the weld metal.

According to a preferred embodiment of the invention, the rutile flux cored welding wire comprises a weight ratio of titanium to aluminum (Ti/Al) in the range of 5-15. This ratio is optimized to ensure that titanium effectively functions as a grain refiner while minimizing the potential negative effects of aluminum on the weld metal's toughness.

Aluminum is primarily known for its role as a deoxidizing agent in steels, similar to silicon and, to a minor extent, manganese and titanium. When added to steel, aluminum readily forms aluminum oxide (Al₂O₃), effectively removing most of the oxygen from the steel. However, in the context of welding, the presence of aluminum can also lead to the formation of fragile intermetallic precipitates at the grain boundaries, resulting in a more brittle weld metal. To minimize the risk of forming these undesirable phases, it is favorable to keep the aluminum content in welding consumables as low as possible. Aluminum is more commonly used in self-shielding products, where gas shielding is not present, and toughness is not a primary requirement. In the case of the present invention, the aluminum content in the welding wire is kept as low as possible, with the aim of reducing its potential negative impact on the weld metal's properties.

By maintaining a Ti/Al weight ratio between 5 and 15, the welding wire ensures that there is sufficient titanium to promote effective grain refinement while limiting the amount of aluminum present.

According to a preferred embodiment of the invention, the rutile flux cored welding wire comprises a weight ratio of manganese to carbon (Mn/C) in the range of 7-10. This ratio is selected to optimize the mechanical properties of the weld metal, particularly its tensile strength and toughness, while also ensuring the effective deoxidation and impurity removal during the welding process. Given that a certain amount of Mn in needed because of its role as a substitutional element, going below the lower limit of the ratio would mainly imply a higher carbon content in the formulation, which would allow to reach proper tensile properties, but not the desired Charpy v-notch values. Exceeding the upper limit of the Mn/C ratio in first instance would be due to a lower carbon content. This would result in a lower tensile strength of the weld metal that could be regulated by increasing Mn (that drives also to higher ratio). In a certain range, this would maintain proper mechanical properties, but would defeat the purpose of having a low Mn emission welding wire.

According to a preferred embodiment of the invention, the rutile flux cored welding wire comprises a summed amount of titanium and aluminum (Ti+Al) in the range of 0.20-0.40 wt.-%, based on the total weight of the welding wire. This controlled range of Ti+Al ensures optimal grain refinement and proper deoxidation in the weld metal while minimizing the potential for the formation of detrimental phases. This range is based on the possible minimization of Al in the composition and the consequent amount of Ti needed.

According to a preferred embodiment of the invention, the rutile flux cored welding wire comprises a summed amount of manganese and carbon (Mn+C) in the range of 0.45-0.65 wt.-%, based on the total weight of the welding wire. This range of Mn+C ensures optimal mechanical properties, particularly tensile strength and toughness, while also promoting effective deoxidation and weld pool wetting during the welding process. This range is strongly correlated with the Mn/C ratio. As a matter of fact, keeping fixed the smallest range of Mn that allows to have a low Mn emission welding wire with proper toughness (also due to Ti and B combination), there is a certain range of C that ensures also (together with Si) to reach the desired tensile properties.

Preferably, in a first embodiment, the rutile flux contained in the welding wire of the invention has the following composition:

| | |
|---|---|
| C: | 0.010 - 0.035 wt.-% |
| Mn: | 0.100 - 0.350 wt.-% |
| Si: | 0.300 - 0.600 wt.-% |
| B: | 0.005 - 0.025 wt.-% |
| Ti: | 0.150 - 0.450 wt.-% |
| Mg: | 0.100 - 0.700 wt.-% |
| TiO₂: | 5.000 - 10.000 wt.-% |
| SiO₂: | 0.500 - 1.000 wt.-% |

and optionally:

| | |
|---|---|
| P: | 0.000 - 0.006 wt.-% |
| S: | 0.000 - 0.003 wt.-% |
| Ni: | 0.000 - 0.450 wt.-% |
| Cu: | 0.000 - 0.150 wt.-% |

Cr, Nb, N, Mo, Al, W and V: 0.000 - 0.035 wt.-% each,
the balance being iron and unavoidable impurities, wherein any percentages by weight denote the weight of the respective element with respect to the total weight of the rutile flux cored welding wire.

Preferably, in a second embodiment, the rutile flux has the following composition:

| | |
|---|---|
| C: | 0.010 - 0.035 wt.-% |
| Mn: | 0.150 - 0.350 wt.-% |
| Si: | 0.350 - 0.600 wt.-% |
| B: | 0.005 - 0.020 wt.-% |
| Ti: | 0.150 - 0.400 wt.-% |
| Mg: | 0.100 - 0.650 wt.-% |
| TiO₂: | 5.500 - 10.000 wt.-% |
| SiO₂: | 0.500 - 0.900 wt.-% |

and optionally:

| | |
|---|---|
| P: | 0.000 - 0.005 wt.-% |
| S: | 0.000 - 0.002 wt.-% |
| Ni: | 0.000 - 0.450 wt.-% |
| Cu: | 0.000 - 0.120 wt.-% |

Cr, Nb, N, Mo, Al, W and V: 0.000 - 0.035 wt.-% each,
the balance being iron and unavoidable impurities, wherein any percentages by weight denote the weight of the respective element with respect to the total weight of the rutile flux cored welding wire.

Preferably, in a third embodiment, the rutile flux has the following composition:

| | |
|---|---|
| C: | 0.010 - 0.030 wt.-% |
| Mn: | 0.180 - 0.300 wt.-% |
| Si: | 0.350 - 0.550 wt.-% |
| B: | 0.005 - 0.018 wt.-% |
| Ti: | 0.200 - 0.350 wt.-% |
| Mg: | 0.100 - 0.650 wt.-% |
| TiO₂: | 6.000 - 9.500 wt.-% |
| SiO₂: | 0.550 - 0.900 wt.-% |

and optionally:

| | |
|---|---|
| P: | 0.000 - 0.004 wt.-% |
| S: | 0.000 - 0.0015 wt.-% |
| Ni: | 0.000 - 0.450 wt.-% |
| Cu: | 0.000 - 0.100 wt.-% |

Cr, Nb, N, Mo, Al, W and V: 0.000 - 0.035 wt.-% each,
the balance being iron and unavoidable impurities,
wherein any percentages by weight denote the weight of the respective element with respect to the total weight of the rutile flux cored welding wire.

In a welding wire having a rutile flux of the first or second embodiment, the sheath may preferably have the following composition:

| | |
|---|---|
| C: | 0.010 - 0.060 wt.-% |
| Mn: | 0.100 - 0.400 wt.-% |
| P: | 0.000 - 0.025 wt.-% |
| S: | 0.000 - 0.020 wt.-% |

the balance being iron and unavoidable impurities,
wherein any percentages by weight denote the weight of the respective element with respect to the total weight of the sheath.

In a welding wire having a rutile flux of the second or third embodiment, the sheath may preferably have the following composition:

| | |
|---|---|
| C: | 0.020 - 0.050 wt.-% |
| Mn: | 0.150 - 0.300 wt.-% |
| P: | 0.000 - 0.012 wt.-% |
| S: | 0.000 - 0.010 wt.-% |

the balance being iron and unavoidable impurities,
wherein any percentages by weight denote the weight of the respective element with respect to the total weight of the sheath.

In another preferred embodiment the filling ratio of the rutile cored welding wire according to this invention amounts to 13.0 - 15.5 wt.-%, preferably 13.5 - 15 wt.-%.

In some embodiments, the rutile cored welding wire according to this invention may be coated with copper or a coating comprising copper. The rutile cored wire can have an outer diameter of 0.9 mm to 1.6 mm.

In order to lock in the filling powder inside the sheath, it is preferably provided that the sheath is formed by a seamless, laser or high frequency welding, butt-butted or folded manufacturing route. In the seamless manufacturing process, the powder is introduced into an already closed pipe by vibration in a subsequent process step.

In the following, the invention will be explained in more detail by way of exemplary embodiments.

Rutile flux cored welding wires according to Table 1 were used.

**Table 1: Rutile flux cored welding wire compositions, any percentages by weight denote the weight of the respective element with respect to the total weight of the rutile flux cored welding wire.**

| **Ex.No.** | **1** | **2** | **3** | **4** | **5** |
|---|---|---|---|---|---|
| **Sheath** | | | | | |
| **C (wt.-%)** | 0.035 | 0.041 | 0.046 | 0.046 | 0.037 |
| **Mn (wt.-%)** | 0.206 | 0.227 | 0.215 | 0.215 | 0.218 |
| **Si (wt.-%)** | 0.023 | 0.004 | 0.006 | 0.006 | 0.029 |
| **P (wt.-%)** | 0.008 | 0.009 | 0.010 | 0.010 | 0.007 |
| **S (wt.-%)** | 0.004 | 0.006 | 0.008 | 0.008 | 0.004 |
| **Balance:** | iron and unavoidable impurities | iron and unavoidable impurities | iron and unavoidable impurities | iron and unavoidable impurities | iron and unavoidable impurities |

| **Rutile Flux** | | | | | |
|---|---|---|---|---|---|
| **C (wt.-%)** | 0.023 | 0.025 | 0.026 | 0.026 | 0.029 |
| **Mn (wt.-%)** | 0.212 | 0.239 | 0.244 | 0.244 | 0.287 |
| **Si (wt.-%)** | 0.442 | 0.452 | 0.454 | 0.454 | 0.479 |
| **P (wt.-%)** | 0.003 | 0.003 | 0.003 | 0.003 | 0.003 |
| **S (wt.-%)** | 0.001 | 0.001 | 0.001 | 0.001 | 0.001 |
| **B (wt.-%)** | 0.014 | 0.014 | 0.014 | 0.014 | 0.012 |
| **Ti (wt.-%)** | 0.247 | 0.252 | 0.247 | 0.247 | 0.268 |
| **Mg (wt.-%)** | 0.521 | 0.533 | 0.520 | 0.520 | 0.565 |
| **Ni (wt.-%)** | - | - | - | - | 0.416 |
| **TiO₂ (wt.-%)** | 7.18 | 7.34 | 7.36 | 7.36 | 7.86 |
| **SiO₂ (wt.-%)** | 0.67 | 0.68 | 0.67 | 0.67 | 0.72 |
| **Balance:** | iron and unavoidable impurities | iron and unavoidable impurities | iron and unavoidable impurities | iron and unavoidable impurities | iron and unavoidable impurities |
| **Coating** | Cu | | | | |
| **Diameter (mm)** | 1.2 | 1.2 | 1.2 | 1.2 | 1.2 |
| **Filling Ratio (%)** | 13.7 | 14.0 | 13.7 | 13.7 | 14.9 |

Welding tests have been conducted with the rutile flux cored welding wires indicated in Table 1, wherein the welding parameters indicated in Table 2 were used during the arc welding process.

**Table 2: welding parameters**

| **Ex.No.** | **1** | **2** | **3** | **4** | **5** |
|---|---|---|---|---|---|
| **Shielding gas** | M21 | M21 | M21 | M20 | M21 |
| **Current (A)** | 260 | 250 | 255 | 260 | 230 |
| **Voltage (V)** | 28.5 | 28.5 | 28.6 | 28.6 | 28.4 |
| **Welding speed (mm/min)** | 370 | 360 | 360 | 365 | 355 |
| **Wire Speed (m/min)** | 9.0 | 9.0 | 9.0 | 9.0 | 9.5 |
| **Heat Input (kJ/mm)** | 0.96 | 0.95 | 0.97 | 0.98 | 0.88 |

| | | | | | |
|---|---|---|---|---|---|
| M20: 92% Ar / 8% CO2, M21: 82% Ar / 18% CO2 | | | | | |

The resulting weld metal compositions are shown in Table 3.

**Table 3: weld metal compositions**

| **Ex.No.** | **1** | **2** | **3** | **4** | **5** |
|---|---|---|---|---|---|
| **C (wt.-%)** | 0.054 | 0.060 | 0.061 | 0.067 | 0.066 |
| **Mn (wt.-%)** | 0.261 | 0.247 | 0.262 | 0.257 | 0.272 |
| **Si (wt.-%)** | 0.506 | 0.401 | 0.453 | 0.480 | 0.548 |
| **P (wt.-%)** | 0.011 | 0.012 | 0.010 | 0.011 | 0.013 |
| **S (wt.-%)** | 0.007 | 0.007 | 0.008 | 0.009 | 0.008 |
| **B (wt.-%)** | 0.005 | 0.005 | 0.005 | 0.006 | 0.005 |
| **Ti (wt.-%)** | 0.049 | 0.038 | 0.042 | 0.048 | 0.047 |
| **Ni (wt.-%)** | 0.013 | 0.014 | 0.016 | 0.017 | 0.440 |
| **Balance:** | iron and unavoidable impurities | iron and unavoidable impurities | iron and unavoidable impurities | iron and unavoidable impurities | iron and unavoidable impurities |

The weld metals of Table 3 were tested for their mechanical properties in accordance with EN ISO 6892-1:2020 (Rm, Rp_{0.2}, A, Z) and EN ISO 148-1:2016 (KV) and the results are indicated in Table 4.

**Table 4: Results**

| **Ex. No.** | **1** | **2** | **3** | **4** | **5** |
|---|---|---|---|---|---|
| **Rm (MPa)** | 513 | 503 | 510 | 520 | 532 |
| **Rp_{0.2} (MPa)** | 456 | 431 | 453 | 455 | 471 |
| **Elongation A (%)** | 25.7 | 26.4 | 25.6 | 27.0 | 22.7 |
| **Striction Z (%)** | 70.2 | 71.6 | 70.2 | 67.9 | 65.8 |
| **KV @ -20°C (J)** | 106 | 102 | 98 | 126 | 112 |
| **KV @ -30°C (J)** | 86 | 97 | 91 | 123 | 108 |

The rutile cored wires of Example 2 and 5 were used to conduct a welding fume analysis. Testing was performed using the welding parameters indicated in Table 5.

**Table 5: Fume analysis welding parameters**

| **Parameter** | **2** | **5** |
|---|---|---|
| **Wire speed** | 11.6 m/min | 11.5 m/min |
| **Current** | 250 A | 250 A |
| **Voltage** | 28.5 V | 29 V |
| **Shielding gas** | M21 | M21 |
| **Shielding gas flow rate** | 18 L/min | 15 L/min |
| **Polarity** | DC + | DC + |
| **Welding speed** | 42 cm/min | 55 cm/min |
| **Contact tip welding distance** | 20 mm | 20 mm |

The fume analysis was carried out according to EN ISO 15011:2018 and provided the results indicated in Table 6.

**Table 6: Results fume analysis:**

| **Fume components** | **2** | **5** |
|---|---|---|
| **Fe** | 40.14 wt.-% | 40.0 wt.-% |
| **Mn** | 3.33 wt.-% | 1.90 wt.-% |
| **Ni** | 0.09 wt.-% | 0.10 wt.-% |
| **Cu** | 0.28 wt.-% | 0.25 wt.-% |
| **Cr** | 0.03 wt.-% | 0.03 wt.-% |
| **Fume emission rate (FER)** | 6.61 ± 0.65 mg/s | 6.2 ± 0.3 mg/s |
| **Mn emission rate** | 0.220 mg/s | 0.118 mg/s |

These examples show that a rutile flux welding wire according to this invention results in a weld metal of good mechanical properties while showing significantly less manganese fumes during the welding process.

## Claims

1. A weld metal having the following composition:
| | |
|---|---|
| C: | 0.035 - 0.085 wt.-% |
| Mn: | 0.150 - 0.440 wt.-%, preferably 0.150 - 0.400 wt.-%, |
| Si: | 0.250 - 0.650 wt.-% |
| B: | 0.002 - 0.010 wt.-% |
| Ti: | 0.025 - 0.070 wt.-% |
and optionally:
| | |
|---|---|
| Cu: | 0.000 - 0.200 wt.-% |
| Ni: | 0.000 - 0.500 wt.-% |
| S: | 0.000 - 0.020 wt.-% |
| P: | 0.000 - 0.020 wt.-% |
Nb, N, Mo, Al, and V: < 0.020 wt.-% each,
Cr and W: < 0.040 wt.-% each,
the balance being iron and unavoidable impurities,
wherein any percentages by weight denote the weight of the respective element with respect to the total weight of the weld metal.

2. A weld metal according to claim 1, having the following composition:
| | |
|---|---|
| C: | 0.040 - 0.080 wt.-% |
| Mn: | 0.200 - 0.440 wt.-%, preferably 0.200 - 0.400 wt.-%, |
| Si: | 0.300 - 0.650 wt.-% |
| B: | 0.002 - 0.010 wt.-% |
| Ti: | 0.030 - 0.070 wt.-% |
and optionally:
| | |
|---|---|
| Cu: | 0.000 - 0.200 wt.-% |
| Ni: | 0.000 - 0.500 wt.-% |
| S: | 0.000 - 0.015 wt.-% |
| P: | 0.000 - 0.015 wt.-% |
| Nb, N, Mo, Al, and V: | < 0.020 wt.-% each, |
Cr and W: < 0.040 wt.-% each,
the balance being iron and unavoidable impurities, wherein any percentages by weight denote the weight of the respective element with respect to the total weight of the weld metal.

3. A weld metal according to claim 1 or 2, having the following composition:
| | |
|---|---|
| C: | 0.045 - 0.075 wt.-% |
| Mn: | 0.200 - 0.400 wt.-% |
| Si: | 0.350 - 0.600 wt.-% |
| B: | 0.002 - 0.008 wt.-% |
| Ti: | 0.030 - 0.065 wt.-% |
and optionally:
| | |
|---|---|
| Cu: | 0.000 - 0.200 wt.-% |
| Ni: | 0.000 - 0.500 wt.-% |
| S: | 0.000 - 0.015 wt.-% |
| P: | 0.000 - 0.015 wt.-% |
Nb, N, Mo, Al, and V: < 0.020 wt.-% each,
Cr and W: < 0.040 wt.-% each,
the balance being iron and unavoidable impurities,
wherein any percentages by weight denote the weight of the respective element with respect to the total weight of the weld metal.

4. A weld metal according to claim 1, 2 or 3, **characterized in that** the weld metal comprises a weight ratio B/Ti of 0.03-0.4, preferably 0.03-0.33, preferably 0.03-0.27.

5. A weld metal according to any one of claims 1 to 4, **characterized in that** the weld metal comprises a weight ratio Mn/C of 3.5-6.

6. A weld metal according to any one of claims 1 to 5, **characterized in that** the summed amount of Mn and C in the weld metal comprises 0.25-0.45 wt.-%, based on the total weight of the weld metal.

7. A rutile flux cored welding wire for producing a weld metal according to any one of claims 1 to 6 by means of electric arc welding, comprising a rutile flux and a sheath enclosing the rutile flux, **characterized by** the following composition:
| | |
|---|---|
| C: | 0.035 - 0.075 wt.-% |
| Mn: | 0.300 - 0.600 wt.-% |
| Si: | 0.300 - 0.700 wt.-% |
| B: | 0.005 - 0.020 wt.-% |
| Ti: | 0.150 - 0.400 wt.-% |
| Mg: | 0.300 - 0.700 wt.-% |
| TiO₂: | 5.000 - 10.000 wt.-% |
| SiO₂: | 0.500 - 1.000 wt.-% |
and optionally:
| | |
|---|---|
| P: | 0.000 - 0.020 wt.-% |
| S: | 0.000 - 0.002 wt.-% |
| Ni: | 0.000 - 0.450 wt.-% |
| Cu: | 0.000 - 0.300 wt.-% |
Cr, Nb, N, Mo, Al, W and V: 0.000 - 0.035 wt.-% each,
at least one arc stabilizer containing, e.g., sodium
oxide and potassium oxide,
the balance being iron and unavoidable impurities,
wherein any percentages by weight denote the weight of the respective element with respect to the total weight of the welding wire.

8. A rutile flux cored welding wire according to claim 7, having the following composition:
| | |
|---|---|
| C: | 0.040 - 0.070 wt.-% |
| Mn: | 0.350 - 0.600 wt.-% |
| Si: | 0.300 - 0.600 wt.-% |
| B: | 0.005 - 0.020 wt.-% |
| Ti: | 0.200 - 0.400 wt.-% |
| Mg: | 0.350 - 0.650 wt.-% |
| TiO₂: | 5.500 - 10.000 wt.-% |
| SiO₂: | 0.500 - 0.900 wt.-% |
and optionally:
| | |
|---|---|
| P: | 0.000 - 0.015 wt.-% |
| S: | 0.000 - 0.0015 wt.-% |
| Ni: | 0.000 - 0.450 wt.-% |
| Cu: | 0.000 - 0.250 wt.-% |
Cr, Nb, N, Mo, Al, W and V: 0.000 - 0.035 wt.-% each,
at least one arc stabilizer containing, e.g., sodium
oxide and potassium oxide,
the balance being iron and unavoidable impurities,
wherein any percentages by weight denote the weight of the respective element with respect to the total weight of the welding wire.

9. A rutile flux cored welding wire according to claim 7 or 8, having the following composition:
| | |
|---|---|
| C: | 0.040 - 0.065 wt.-% |
| Mn: | 0.350 - 0.650 wt.-% |
| Si: | 0.300 - 0.600 wt.-% |
| B: | 0.005 - 0.018 wt.-% |
| Ti: | 0.200 - 0.350 wt.-% |
| Mg: | 0.400 - 0.650 wt.-% |
| TiO₂: | 6.000 - 9.500 wt.-% |
| SiO₂: | 0.550 - 0.900 wt.-% |
and optionally:
| | |
|---|---|
| P: | 0.000 - 0.015 wt.-% |
| | |
|---|---|
| S: | 0.000 - 0.0015 wt.-% |
| Ni: | 0.000 - 0.450 wt.-% |
| Cu: | 0.000 - 0.250 wt.-% |
Cr, Nb, N, Mo, Al, W and V: 0.000 - 0.035 wt.-% each,
at least one arc stabilizer containing, e.g., sodium
oxide and potassium oxide,
the balance being iron and unavoidable impurities,
wherein any percentages by weight denote the weight of the respective element with respect to the total weight of the welding wire.

10. A rutile flux cored welding wire according to any one of claims 7 to 9, **characterized in that** the at least one arc stabilizer is present in an amount of 0.4-1.3 wt.-%, preferably 0.5-1.2 wt.-%, preferably 0.6-1.2 wt.-% of the welding wire.

11. A rutile flux cored welding wire according to any one of claims 7 to 10, **characterized in that** the welding wire comprises 0.15-0.45 wt.-% Ni.

12. A rutile flux cored welding wire according to any one of claims 7 to 11, **characterized in that** the welding wire comprises a weight ratio Mn/Ti of 0.75-4, preferably 1.5-2.5.

13. A rutile flux cored welding wire according to any one of claims 7 to 12, **characterized in that** the welding wire comprises a weight ratio B/Ti of 0.015-0.10, preferably 0.030-0.090, preferably 0.030-0.060.

14. A rutile flux cored welding wire according to any one of claims 7 to 13, **characterized in that** the welding wire comprises a weight ratio Mn/C of 7-10.

15. A rutile flux cored welding wire according to any one of claims 7 to 14, **characterized in that** the summed amount of Mn and C in the welding wire comprises 0.45-0.65 wt.-%, based on the total weight of the rutile flux cored welding wire.

16. A rutile flux cored welding wire according to any one of claims 7 to 15, wherein the use of the rutile flux cored welding wire in an electric arc welding process results in a fume comprising less than 4 wt.-%, preferably less than 3.5 wt.-% of Mn, measured according to EN ISO 15011-4:2017.

17. A rutile flux cored welding wire according to any one of claims 7 to 16, wherein the welding wire is coated with a coating being made of or comprising Cu.

## Amended claims

### Amended claims in accordance with Rule 137(2) EPC.

1. A weld metal having the following composition:
C: 0.035 - 0.085 wt.-%
Mn: 0.150 - 0.440 wt.-%, preferably 0.150 - 0.400 wt.-%,
Si: 0.250 - 0.650 wt.-%
B: 0.002 - 0.010 wt.-%
Ti: 0.025 - 0.070 wt.-%
and optionally:
Cu: 0.000 - 0.200 wt.-%
Ni: 0.000 - 0.500 wt.-%
S: 0.000 - 0.020 wt.-%
P: 0.000 - 0.020 wt.-%
Nb, N, Mo, Al, and V: < 0.020 wt.-% each,
Cr and W: < 0.040 wt.-% each,
the balance being iron and unavoidable impurities,
wherein any percentages by weight denote the weight of the respective element with respect to the total weight of the weld metal.

2. A weld metal according to claim 1, having the following composition:
C: 0.040 - 0.080 wt.-%
Mn: 0.200 - 0.440 wt.-%, preferably 0.200 - 0.400 wt.-%,
Si: 0.300 - 0.650 wt.-%
B: 0.002 - 0.010 wt.-%
Ti: 0.030 - 0.070 wt.-%
and optionally:
Cu: 0.000 - 0.200 wt.-%
Ni: 0.000 - 0.500 wt.-%
S: 0.000 - 0.015 wt.-%
P: 0.000 - 0.015 wt.-%
Nb, N, Mo, Al, and V: < 0.020 wt.-% each,
Cr and W: < 0.040 wt.-% each,
the balance being iron and unavoidable impurities,
wherein any percentages by weight denote the weight of the respective element with respect to the total weight of the weld metal.

3. A weld metal according to claim 1 or 2, having the following composition:
C: 0.045 - 0.075 wt.-%
Mn: 0.200 - 0.400 wt.-%
Si: 0.350 - 0.600 wt.-%
B: 0.002 - 0.008 wt.-%
Ti: 0.030 - 0.065 wt.-%
and optionally:
Cu: 0.000 - 0.200 wt.-%
Ni: 0.000 - 0.500 wt.-%
S: 0.000 - 0.015 wt.-%
P: 0.000 - 0.015 wt.-%
Nb, N, Mo, Al, and V: < 0.020 wt.-% each,
Cr and W: < 0.040 wt.-% each,
the balance being iron and unavoidable impurities,
wherein any percentages by weight denote the weight of the respective element with respect to the total weight of the weld metal.

4. A weld metal according to claim 1, 2 or 3, **characterized in that** the weld metal comprises a weight ratio B/Ti of 0.03-0.4, preferably 0.03-0.33, preferably 0.03-0.27.

5. A weld metal according to any one of claims 1 to 4, **characterized in that** the weld metal comprises a weight ratio Mn/C of 3.5-6.

6. A weld metal according to any one of claims 1 to 5, **characterized in that** the summed amount of Mn and C in the weld metal comprises 0.25-0.45 wt.-%, based on the total weight of the weld metal.

7. A rutile flux cored welding wire for producing a weld metal according to any one of claims 1 to 6 by means of electric arc welding, comprising a rutile flux and a sheath enclosing the rutile flux, **characterized by** the following composition:
C: 0.035 - 0.075 wt.-%
Mn: 0.300 - 0.600 wt.-%
Si: 0.300 - 0.700 wt.-%
B: 0.005 - 0.020 wt.-%
Ti: 0.150 - 0.400 wt.-%
Mg: 0.300 - 0.700 wt.-%
TiO₂: 5.000 - 10.000 wt.-%
SiO₂: 0.500 - 1.000 wt.-%
and optionally:
P: 0.000 - 0.020 wt.-%
S: 0.000 - 0.002 wt.-%
Ni: 0.000 - 0.450 wt.-%
Cu: 0.000 - 0.300 wt.-%
Cr, Nb, N, Mo, Al, W and V: 0.000 - 0.035 wt.-% each,
at least 0.4-1.3 wt.-% of an arc stabilizer selected from the group consisting of: sodium oxide, potassium oxide, potassium feldspar, synthetic cryolite and sodium titanate,
the balance being iron and unavoidable impurities,
wherein any percentages by weight denote the weight of the respective element with respect to the total weight of the welding wire.

8. A rutile flux cored welding wire according to claim 7, having the following composition:
C: 0.040 - 0.070 wt.-%
Mn: 0.350 - 0.600 wt.-%
Si: 0.300 - 0.600 wt.-%
B: 0.005 - 0.020 wt.-%
Ti: 0.200 - 0.400 wt.-%
Mg: 0.350 - 0.650 wt.-%
TiO₂: 5.500 - 10.000 wt.-%
SiO₂: 0.500 - 0.900 wt.-%
and optionally:
P: 0.000 - 0.015 wt.-%
S: 0.000 - 0.0015 wt.-%
Ni: 0.000 - 0.450 wt.-%
Cu: 0.000 - 0.250 wt.-%
Cr, Nb, N, Mo, Al, W and V: 0.000 - 0.035 wt.-% each,
at least one arc stabilizer containing, e.g., sodium oxide and potassium oxide,
the balance being iron and unavoidable impurities,
wherein any percentages by weight denote the weight of the respective element with respect to the total weight of the welding wire.

9. A rutile flux cored welding wire according to claim 7 or 8, having the following composition:
C: 0.040 - 0.065 wt.-%
Mn: 0.350 - 0.650 wt.-%
Si: 0.300 - 0.600 wt.-%
B: 0.005 - 0.018 wt.-%
Ti: 0.200 - 0.350 wt.-%
Mg: 0.400 - 0.650 wt.-%
TiO₂: 6.000 - 9.500 wt.-%
SiO₂: 0.550 - 0.900 wt.-%
and optionally:
P: 0.000 - 0.015 wt.-%
S: 0.000 - 0.0015 wt.-%
Ni: 0.000 - 0.450 wt.-%
Cu: 0.000 - 0.250 wt.-%
Cr, Nb, N, Mo, Al, W and V: 0.000 - 0.035 wt.-% each,
at least one arc stabilizer containing, e.g., sodium oxide and potassium oxide,
the balance being iron and unavoidable impurities,
wherein any percentages by weight denote the weight of the respective element with respect to the total weight of the welding wire.

10. A rutile flux cored welding wire according to any one of claims 7 to 9, **characterized in that** the at least one arc stabilizer is present in an amount of 0.5-1.2 wt.-%, preferably 0.6-1.2 wt.-% of the welding wire.

11. A rutile flux cored welding wire according to any one of claims 7 to 10, **characterized in that** the welding wire comprises 0.15-0.45 wt.-% Ni.

12. A rutile flux cored welding wire according to any one of claims 7 to 11, **characterized in that** the welding wire comprises a weight ratio Mn/Ti of 0.75-4, preferably 1.5-2.5.

13. A rutile flux cored welding wire according to any one of claims 7 to 12, **characterized in that** the welding wire comprises a weight ratio B/Ti of 0.015-0.10, preferably 0.030-0.090, preferably 0.030-0.060.

14. A rutile flux cored welding wire according to any one of claims 7 to 13, **characterized in that** the welding wire comprises a weight ratio Mn/C of 7-10.

15. A rutile flux cored welding wire according to any one of claims 7 to 14, **characterized in that** the summed amount of Mn and C in the welding wire comprises 0.45-0.65 wt.-%, based on the total weight of the rutile flux cored welding wire.

16. A rutile flux cored welding wire according to any one of claims 7 to 15, wherein the use of the rutile flux cored welding wire in an electric arc welding process results in a fume comprising less than 4 wt.-%, preferably less than 3.5 wt.-% of Mn, measured according to EN ISO 15011-4:2017.

17. A rutile flux cored welding wire according to any one of claims 7 to 16, wherein the welding wire is coated with a coating being made of or comprising Cu.
